# EUROPEAN PATENT SPECIFICATION

(11) **EP 1 505 129 B1**
(45) Date of publication and mention of the grant of the patent: **21.12.2005**
(21) Application number: 04017944.2
(22) Date of filing: 29.07.2004
(51) Int. Cl.: C09D 131/04, C09D 115/02, C09D 123/28, C08J 7/04

(54) **Method for painting plastic substrates**
Verfahren zum lackieren von Kunststoffgegenständen
Procédé pour peindre des subtrats en plastique

(30) Priority: 04.08.2003 US 634330
(43) Date of publication of application: 09.02.2005
(73) Proprietor: E. I. du Pont de Nemours and Company, Wilmington, Delaware 19898 (US)
(72) Inventor: Kloeckner, Harald, 51789 Lindlar (DE); Berschel, Guenter, 50735 Köln (DE); Stricker, Wolfgang, 42897 Remscheid (DE); Duda, Andrew, 45968 Gladbech (DE); Hellmann, Udo, 42897 Remscheid (DE)
(74) Representative: DuPont Performance Coatings Biering/Blum/Kimpel

(56) References cited:
- EP-A- 0 324 497
- EP-A- 0 478 277
- EP-A- 0 689 567
- US-A- 3 689 441

## Description

### Field of the invention

The invention relates to a method for direct painting of plastic substrates, in particular of non-polar plastic substrates consisting of polypropylene or containing polypropylene with colour- and/or effect-imparting coating compositions. The method can be used in vehicle and industrial painting.

### Background of the invention

Fittings for the automotive industry, such as bumper panels, spoilers, sills, wheel housing panels and lateral panels and lining strips and a large number of components for non-automotive applications are increasingly manufactured from plastics material. In addition to materials, such as polyamide and unsaturated polyester resin compression moulding materials, which have been conventional for many years, polyolefins and polyolefin blends are increasingly being used. Painting of polyolefins of this type, for example, the polypropylene preferably used for the automotive industry and its blends (for example PP-EPDM = polypropylene ethylene/propylene/diene mixed polymers) is problematical, however, due to the low surface tension of these plastics materials.

Plastic coatings have in particular to exhibit good adhesion to the respective plastic substrate. It is known to physically and/or chemically pre-treat plastic parts made of polyolefins, such as those made of polypropylene, in order to ensure good adhesion to the plastic substrate. In this connection, methods of this type are known, such as flame treatment, plasma pre-treatment, corona discharge or chemical oxidation. Chemical adhesion promotion as a result of application of primers based on chlorinated polyolefins to the plastic substrates *inter alia* is conventional in vehicle painting. Only after applying a primer layer of this type is it at all possible to apply further paint layers to the plastic substrate with acceptable adhesion.

Therefore, for example, EP-A-324 497 describes a primer for plastic coating based on ethylene vinyl acetate copolymers, chlorinated polyolefins, epoxy resins and organic solvents. In addition to the fact that the necessary application of a primer entails additional labour, these primers also have the drawback of insufficient heat resistance, i.e., during subsequent heating of the applied and dried or cured primer layer, for example, during thermal curing of subsequent paint coats, lifting of the primer from the substrate, including the top coat applied thereto, can be observed.

The use of a primer for the painting of plastics materials is not an effective solution. Therefore, it has been proposed to use appropriately modified colour- and/or effect-imparting base coats for direct painting of non-polar plastic substrates. Special effect base coats for direct coating of polypropylene substrates are known from DE-A 40 14 212 (US 4,725,640); these special effect base coats contain physically drying binders, chlorinated polyolefins, cellulose acetobutyrate, special effect pigments, for example, metallic pigments or pigments based on mica flakes, optionally, colour pigments and organic solvents. These special effect base coats when applied to plastic substrates without prior priming of the plastics materials have a problem of insufficient heat resistance.

Furthermore, EP-A-689 567 describes base coats for direct painting of plastic substrates, which contain 10 to 70% by weight of a filler paste. The filler paste contains polyurethane resins, chlorinated polyolefins, fillers and pigments, organic solvents and optionally, additional additives and additional physically drying binders. Here the base coat containing the filler paste is initially applied directly to the polyolefin substrate, a filler paste-free base coat is applied after brief intermediate evaporation and over-painted with a clear coat after further brief evaporation. The drawback of the use of the base coats described here is the still inadequate adhesion after exposures to various levels of moisture, such as the steam jet test and the condensed water test.

There is therefore a need for modified colour- and/or effect-imparting coating compositions and methods for painting using these coating compositions which, without the use of a separate primer, ensure problem-free application directly to non-polar plastics materials, such as polyolefins and exhibit very good adhesion, even after exposure to high levels of moisture, such as the steam jet test or condensed water test. These paint coats should exhibit good heat resistance and produce coatings with good colour accuracy.

### Summary of the Invention

The present invention relates to a method for painting non-polar, in particular polyolefin plastic substrates, comprising the steps:
1. applying a pigmented paint layer consisting of a colour-and/or effect-imparting coating composition directly to the plastic substrate and
2. curing the pigmented paint layer thus obtained,
wherein the applied colour- and/or effect-imparting coating composition comprises
A) 30 to 90% by weight of a conventional colour- and/or effect-imparting coating composition, comprising
   Aa) at least one binder,
   Ab) at least one colour and/or effect pigment,
   Ac) at least one organic solvent and/or water and
   Ad) optionally, conventional paint additives and
B) 10 to 70% by weight of an adhesion-promoting composition, comprising
   Ba) at least one ethylene vinyl acetate copolymer,
   Bb) at least one chlorinated rubber,
   Bc) at least one chlorinated polyolefin and
   Bd) optionally, organic solvents and/or water and conventional paint additives,
wherein the sum of the portions of components A) and B) makes up 100% by weight.

### Detailed Description of the Invention

The colour and/or effect-imparting coating composition, applied directly to the plastic substrate, is preferably a colour- and/or effect-imparting base coat or a colour- and/or effect-imparting monocoat finish layer. In the case of a colour- and/or effect-imparting base coat the base coat is over-painted with a clear coat.

The present invention therefore relates in a preferred embodiment to a method for painting non-polar, in particular polyolefin plastic substrates, comprising the steps:
1. applying a colour- and/or effect-imparting base coat directly to the plastic substrate,
2. evaporating and/or curing the base coat layer thus obtained,
3. applying a clear coat to the base coat layer obtained,
4. curing the clear coat layer obtained, optionally together with the base coat,
wherein the applied base coat comprises
A) 30 to 90% by weight of a conventional base coat composition, containing
   Aa) at least one binder,
   Ab) at least one colour and/or effect pigment,
   Ac) at least one organic solvent and/or water and
   Ad) optionally, additives conventional in paint and
10 to 70% by weight of the adhesion-promoting composition B),
wherein the sum of the portions of components A) and B) makes up 100% by weight.

Alternatively, the present invention also relates to a method for painting non-polar, in particular polyolefin plastic substrates, comprising the steps:
1. applying a colour- and/or effect-imparting monocoat finish layer directly to the plastic substrate and
2. curing the top coat layer thus obtained,
wherein the applied monocoat finish comprises
A) 30 to 90% of a conventional monocoat finish composition, containing
   Aa) at least one binder,
   Ab) at least one colour and/or effect pigment,
   Ac) at least one organic solvent and/or water and
   Ad) optionally conventional paint additives and
B) 10 to 70% by weight of the adhesion-promoting composition B),
wherein the sum of the portions of components A) and B) makes up 100% by weight.

It is essential to the invention that the colour- and/or effect-imparting coating composition to be applied contains 10 to 70% by weight, preferably 20 to 65% by weight, particularly preferably 30 to 65% by weight, of the adhesion-promoting composition B) (hereinafter called adhesion additive for short). By adding this adhesion additive, paint layers of the colour- and/or effect-imparting coating composition that are applied directly to the plastics substrate are formed having excellent adhesion to the plastic substrate. These paint layers also retain excellent adhesion even after exposure to high levels of moisture, such as the steam jet test or condensed water test and also after exposure to heat, for example, after curing at elevated temperatures of subsequent layers that are applied, such as a clear coat layer. This applies to the application as base coat and also to the application as a pigmented monocoat finish layer.

The colour- and/or effect-imparting base coats and monocoat finishes which can be used in the method according to the invention are conventional solvent-based or water-based base coats and monocoat finishes, as are known to the person skilled in the art for the field of plastic painting. The base coats contain the components Aa) to Ad). The binders Aa) are conventional binders as are used in solvent-based or water-based base coats. Polyurethane, acrylated polyurethane, polyacrylate, polyester, acrylated polyester and/or alkyd resins can be used, for example, as binders. The binder systems can be physically drying and/or chemically crosslinking, for example by means of polymerization, polycondensation and/or polyaddition reactions. Chemically crosslinkable binder systems contain appropriately crosslinkable functional groups. Suitable functional groups are, for example, hydroxyl groups, isocyanate groups, acetoacetyl groups, unsaturated groups, for example, (meth)acryloyl groups, epoxide groups, carboxyl groups and amino groups. Crosslinking agents with appropriately complementary reactive functional groups can be contained for crosslinking. Hydroxyl group-containing binders and polyisocyanate crosslinking agents are preferred for the chemically crosslinkable binder systems.

To ensure adequate water dilutability of the binders when using water-based paints, the binders must be used in water-dilutable form. This can be done in the manner known to the person skilled in the art by ionic and/or non-ionic modification of the binders. There is preferably an anionic and/or non-ionic modification. A anionic modification can, for example, be achieved by incorporating carboxyl groups and at least partial neutralization thereof. Suitable neutralizing agents are base compounds, such as tertiary amines, for example, triethylamine, dimethylethanolamine and diethylethanolamine. A non-ionic modification can be achieved, for example, by incorporating polyethylene oxide units. In addition to or in place of the above modifications of the binder, external emulsifiers can also be used to ensure the required water dilutability.

The coating composition can contain additional resins, such as cellulose esters, such as cellulose acetobutyrate and/or melamine resins.

The above binders are merely an exemplary list. The binders can also be largely modified and randomly combined with one another. The binders which can be used are not subject to any particular restrictions. All binders known to the person skilled in the art and, in particular, conventional in the field of vehicle painting can be used to formulate colour- and/or effect-imparting base coats. Care should merely be taken that no binder/crosslinking systems are selected for the crosslinking wherein the curing temperatures required are so high that they would damage the plastics material being coated.

The colour- and/or effect-imparting base coats contain colour pigments and/or special effect pigments (component Ab). All organic or inorganic pigments conventional in paint are suitable as colour pigments. Examples of inorganic or organic colour pigments are titanium dioxide, micronized titanium dioxide, iron oxide pigments, carbon black, azo pigments, phthalocyanin pigments, quinacridone or perylene or pyrrolopyrrol pigments. Soluble dyes and/or transparent pigments may optionally also be contained. Examples of special effect pigments are metal pigments, for example consisting of aluminum or copper, interference pigments, such as for example, metal oxide-coated metal pigments, for example, titanium dioxide-coated, iron oxide-coated or mixed oxide-coated aluminum, coated mica, such as titanium dioxide-coated mica and/or mica coated with other metal oxides, for example, Fe₂O₃ and/or Cr₂O₃, flaky iron oxide and graphite pigments.

To grind the pigments, pasty resins, for example, based on polyurethane resin or acrylate resin, can be used in the base coats.

The colour- and/or effect-imparting base coats also contain organic solvents and/or water Ac). The organic solvents are conventional paint solvents. These can originate from the production of the binders or are added separately. Examples of suitable solvents are mono- or polyhydric alcohols, for example, propanol, butanol, hexanol; glycol ethers or esters, for example, diethylene glycoldialkylether, dipropylene glycoldialkylether, each with C₁ to C₆ alkyl, ethoxypropanol, butylglycol; glycols, for example, ethylene glycol, propylene glycol, N-methylpyrrolidone and ketones, for example, methylethylketone, acetone, cyclohexanone, aromatic or aliphatic hydrocarbons, for example, toluene, xylene or linear or branched aliphatic C₆ to C₁₂ hydrocarbons. Preferably, water-miscible organic solvents are used in the water based paints, if required.

The colour- and/or effect-imparting base coats can also contain additive(s) Ad). Examples of these are flow-control agents, rheology-influencing agents, such as highly disperse silicic acid or polymer urea compounds, thickeners such as carboxyl group-containing polyacrylate thickeners or associative thickeners based on polyurethane, microgels, defoaming agents, wetting agents, anti-cratering agents, adhesion promoters and curing accelerators. The additives are used in conventional amounts and are known to the person skilled in the art.

The pigmented monocoat finish paints also contain the components Aa) to Ad). The binders Aa) are conventional binders as used in solvent-based or water-based pigmented topcoats. The above description of the various components of the base coats, also applies to the description of the binders Aa) and the additional components Ab) (colour- and/or special effect-pigments), Ac) (organic solvents and/or water) and Ad) (conventional paint additives). However, chemically crosslinking binders, preferably, hydroxy functional binders and polyisocyanate curing agents, are preferably used in the monocoat finish paints.

The adhesion additive B) essential to the invention preferably contains
Ba) 1.0 to 10.0% by weight, particularly preferably, 1.0 to 3.0% by weight of at least one ethylene vinyl acetate copolymer,
Bb) 0.5 to 10.0% by weight, particularly preferably, 0.5 to 3.0% by weight, of at least one chlorinated rubber,
Bc) 1.0 to 10.0% by weight, particularly preferably, 1.0 to 4.0% by weight of at least one chlorinated polyolefin and
Bd) 70.0 to 97.5% by weight, particularly preferably, 90.0 to 97.5% by weight organic solvent and/or water and
optionally conventional paint additives, wherein the sum of the portions of components Ba) to Bd) make up 100% by weight.

Ethylene vinyl acetate copolymers (component Ba) are known copolymers which are also commercially available, for example under the name Elvax®. These are copolymers consisting of ethylene and vinyl acetate. These two monomers may be radically polymerized in any proportions. Further comonomers can also be copolymerized, for example in order to achieve a specific acid number. Preferred ethylene vinyl acetate copolymers which can be used have a vinyl acetate content of 15 to 45% by weight, preferably 25 to 40% by weight.

Chlorinated rubbers (component Bb) are known polymers which are also commercially available, for example under the name Alloprene (ICI Resins). Chlorinated rubbers are chlorinated products of natural or preferably, synthetic rubbers. Examples of synthetic rubbers which can be used are styrene butadiene rubber, acrylonitrile butadiene rubber, butyl rubber, polybutadiene, polyethylene, polypropylene, polyisoprene and ethylene polypropylene rubber. Rubbers are uncrosslinked polymers with rubber-elastic properties at ambient temperature. Chlorination generally takes place in chlorinated hydrocarbons, for example in tetrachlorohydrocarbons such as tetrachloromethane. Preferred chlorinated rubbers which can be used have a chlorine content (fixed chlorine) of about 64 to 68% by weight. The molar masses can, for example, be between 50,000 and 200,000 g/mol.

Chlorinated polyolefins are used as component Bc). The chlorinated polyolefins are, for example, chlorinated polyethylene, chlorinated polypropylene, chlorinated polyethylene/polypropylene copolymers or mixtures thereof. The chlorinated polyolefins generally have a chlorine content of 10 to 45% by weight, preferably 15 to 25% by weight and can be present as a powder, dissolved in organic solvents, preferably aromatic hydrocarbons, or as an aqueous dispersion. The solids content of solutions of chlorinated polyolefins can, for example, be 18 to 60% by weight. Said products are known to the person skilled in the art and are commercially available.

The adhesion additive B) preferably also contains organic solvents and in the case of water-based paints, water and optionally organic solvents. These can be the same solvents as were mentioned above in the description of the base coats. However, organic solvents of this type are used or co-used, in particular in which the components Ba) to Bc) are highly soluble.

The colour- and/or effect-imparting base coats and monocoat finish layers used in the method according to the invention can be produced in that a conventional base coat or monocoat finish layer is produced in a known manner and the adhesion additive is added during production, preferably shortly before application, in individual constituents or preferably as a component. The base coats and monocoat finish layers are, however, preferably produced in the form of a mixing system for formulating a large number of different colours, wherein the adhesive additive is then provided as a component of the mixing system and mixed with the required mixing paints shortly before application. In the process, the pigmented paint composition or the mixture of various mixing paints is preferably initially introduced in each case and the adhesion additive added while stirring thoroughly. The adhesion additive should be very compatible with the corresponding paint systems and should be easily incorporated.

In accordance with the method of the invention, the colour- and/or effect-imparting coating composition modified with the adhesion additive, preferably the base coat or monocoat finish layer, is applied directly to the appropriate plastic substrate. It is applied in a conventional manner, preferably by means of spray application.

When applying base coats, the resulting dry layer thickness of the base coats should be, for example, about 15 to 45 µm. The base coat layer can be hardened separately, optionally after an evaporation phase, at temperatures of ambient temperature to about 80°C, preferably at 20 to 60°C. However, it is preferred for the base coat to be over-painted with a clear coat, optionally after a brief evaporation phase, and then for the two layers to be jointly cured at the above mentioned temperatures.

The clear coats can be any water-based or solvent-based clear coats. In particular, they are two-component clear coats based on chemically crosslinking binders, for example, based on hydroxy functional binder components and polyisocyanate crosslinking agents.

All hydroxyl group-containing polyesters, polyethers, polyurethanes and (meth)acrylocopolymers, known from polyurethane chemistry and which can each be used individually or in combination with one another, can be considered as hydroxy functional binders. The OH functional binders can also be used in the form of hybrids, for example, as (meth)acrylated polyurethanes, (meth)acrylated polyesters and/or poly(meth)acrylate/polyester. Any organic polyisocyanates, preferably diisocyanates, known to the person skilled in the art can be considered as polyisocyanates.

Clear coats based on radically and/or cationically polymerizible binders which are cured by means of UV radiation, also can be used.

The clear coats contain conventional paint additives and can also contain flatting agents and/or structural additives to achieve a flat and/or structured surface.

If water-based clear coats are used sufficient dilutability of the binder in the water-based paints has to be ensured. For this purpose, the binders are converted in a manner known to the person skilled in the art into a water dilutable form by ionic and/or non-ionic modification.

According to a preferred embodiment of the present invention a pigmented coating composition containing the adhesion additive B) is applied initially in a first working step directly to the polyolefin substrate. A conventional coating composition not containing any adhesion additives is then applied in a second working step, preferably after a brief intermediate evaporation time (wet-on-wet). This is preferably the same coating composition constitution in each case. The same procedure can be used for base coats and for monocoat finish layers. Paint layers with very good colour accuracy are achieved. It is advantageous to apply the base coat that does not contain any adhesion additive in just one spraying operation to achieve, for example, the desired colour accuracy and a coating having the good surface quality of a conventional base coat layer.

A further embodiment of the present invention consists of applying a solvent-based base coat containing the adhesive additive B) initially in a first working step directly to the polyolefin substrate and then, preferably after a brief intermediate evaporation time (wet-on-wet), of applying a conventional, water-based paint not containing any adhesion additive in a second working step. In addition to having very good adhesion there is also a further advantage, namely, that to reduce the solvent emission, a water-based paint is used in the second layer. Also, since a conventional base coat in the first layer was used, the disadvantages of using water-based paints, such as blistering with high layer thicknesses, can be minimized.

The clear coat applied to the base coat layer can be cured as described above for curing of the base coat. For example, curing can take place at ambient temperature over several hours or can be forced at temperatures of for example 40 to 80°C, preferably 40 to 60°C, for example within 30 to 80 minutes. With the preferred wet-on-wet application of the clear coat, the base coat or the two base coat layers and clear coat are dried/cured in a common step under the abovementioned conditions. When using binders that can be cured by means of high-energy radiation, the clear coat is cured by means of UV radiation.

When using monocoat finish layers application takes place, for example, with a resulting dry layer thickness of about 50 to 70 µm. That which was stated above applies analogously when applying a monocoat finish layer. The curing conditions correspond to those of curing of base coat and/or clear coat. Application can advantageously also take place in the two steps already mentioned - initially application of a monocoat base coat with adhesion additive and subsequent application of a monocoat finish layer without adhesion additive, wherein the combinations first solvent-based top coat with adhesion additive/second solvent-based top coat without adhesion additive, first solvent-based top coat with adhesion additive/second water-based top coat without adhesion additive and first water-based top coat with adhesion additive/second water-based top coat without adhesion additive are also possible here. A further possibility consists in initially applying a solvent-based pigmented top coat with adhesion additive and then a water-based paint without adhesion additive.

The method according to the invention is used in particular when coating polyolefin fittings in the context of vehicle painting, wherein the polyolefin fittings are preferably those made of polypropylene and polypropylene blends. The method can be used in vehicle production line painting and vehicle repair painting. The method according to the invention can, however, also be used in coating any further plastic substrates.

The advantage of the method according to the invention is that the conventional prior priming of the plastics materials using adhesion promoters, can be dispensed with and excellent adhesion of a coating to the plastic substrate is still achieved. This is accomplished by coating initially with a base coat or monocoat finish layer with adhesion additive and subsequent coating with a conventional base coat or monocoat finish layer without adhesion additive, very good colour accuracy of the coatings obtained is achieved. More precisely, this is achieved by the application of the conventional base coat or monocoat finish layer without adhesion additive in just one spraying operation over the initially applied base coat or monocoat containing the adhesion promoter. It is particularly advantageous when using the method according to the invention in vehicle repair painting that the method can also be applied while using a, for example, conventional base coat mixing system pigmented for repair painting. An existing mixing system can be used here and the adhesion additive according to the invention is provided as a component of the mixing system. It is therefore not necessary to provide a separate mixing system especially for the plastic coating.

The invention is to be described in more detail by the following examples. % by weight means per cent by weight, pbw means parts by weight.

### EXAMPLES

### Example 1

### Preparation of an adhesion additive (component B)

An adhesion additive B) was prepared from the following components:
1.7% by weight of an ethylene vinyl acetate copolymer (ELVAX® 260)
5.5% by weight of a chlorinated polyolefin (CPO 343-1, 40% in xylene)
2.5% by weight of chlorinated rubber (Pergut® S 10, 40% in xylene)
51.5% xylene
38.8% butyl acetate

### Example 2

### Preparation of a base coat BL1 modified according to the invention

60 pbw of the adhesion additive prepared above were added while stirring thoroughly to 100 pbw of a commercially available solvent-based, blue pigmented base coat (Standox® base coat: mix 859 + mix 594, mixing ratio 1: 1, based on acrylate resins and cellulose acetobutyrate).

### Example 3 (comparison)

### Preparation of a comparison base coat VBL 1 in accordance with EP 689 567

100 pbw of a filler paste made of a 51 % solution of a polyurethane elastomer (Uraflex XP 221), titanium dioxide and a 25% solution of a chlorinated polyolefin (Eastman CP 343-1) (prepared in accordance with EP 689 567; example: preparation of a light pigment paste A1) were added to 100 pbw of the Standox® base coat used in example 2, and thoroughly mixed.

### Example 4 (comparison)

### Preparation of a comparison base coat VBL2 in accordance with DE 40 14 212

10 pbw of a chlorinated polyolefin (CPO 343-1, 40% in xylene) and 50 pbw of a base coat dilution of organic solvents (Standox® MSB dilution 15-25) were added to 100 pbw of the Standox® base coat used in example 2 and thoroughly mixed.

### Example 5

### Application

Plastic substrates made of PP/EPDM (Hifax® SP 179) were initially tempered at 60°C for 60 minutes and then purified with Standoflex® dilution 11100 and abrasive pad (grey). The base coat BL1 according to the invention and the comparison base coats VBL1 and VBL2 were then each applied by means of spray guns to the plastic substrates in a first spraying operation in a resulting dry layer thickness of about 10 µm. After a brief evaporation time the non-modified base coat (100 pbw Standox® base coat: mix 859 + mix 594, mixing ratio 1: 1 + 60 pbw base coat dilution Standox® MSB dilution 15-25) was in each case applied by means of spray guns in a second spraying to the first base coat layer thus obtained in a resulting dry layer thickness of about 10 µm. After an evaporation time of 10 minutes at ambient temperature one respective commercially available 2K clear coat (Standocryl® 2K-HS-Autolack in a volume ratio 2: 1 with Standox® 2K-HS hardener + 30% by weight Standox® 2K-Elastic additive) was applied by means of spray guns in a resulting dry layer thickness of about 50 µm. After an evaporation time of 10 minutes at ambient temperature curing took place for 30 minutes at 60°C. The results of the paint tests are listed in the following tables:

**Table 1**

| MB depreservation test | BL1 according to the invention | VBL1 | VBL2 |
|---|---|---|---|
| Water temperature 40° Flaking off at the cut | 5.8 mm clear coat detachment | 6.0 mm clear coat detachment | 7.5 mm clear coat detachment |
| Water temperature 60° Flaking off at the cut | 5.2 mm entire film from substrate | 5.2 mm entire film from substrate | 7.4 mm entire film from substrate |
| Water temperature 80° Flaking off at the cut | 5.5 mm entire film from substrate | 11.0 mm entire film from substrate | 8.0 mm entire film from substrate |

The results shown in Table 1 show that the base coat according to the invention has the lowest creep corrosion at the cut and therefore the best adhesion and the best heat resistance in comparison to the comparison base coats VBL1 and VBL2 from the prior art.

**Table 2**

| | VBL1 | | BL1 according to the invention | |
|---|---|---|---|---|
| | A | B | A | B |
| Substrate | PP/EPDM | ABS | PP/EPDM | ABS |
| Cross-hatching unloaded | 5.0 | 5.0 | 0.0 | 0.0 |
| Mandrel flex test | cracks not OK | cracks not OK | no cracks OK | no cracks OK |
| Steam jet testunloaded | 40.0 mm | 47.0 mm | 17.0 mm | 0.3 mm |
| Steam jet test after 72h storage in water | 70.0 mm | 55.0 mm | 18.0 mm | 1.0 mm |
| Tests after 240h/40°C Condensed water constant climate test (KK test) | | | | |
| Cross-hatching 1 h after KK test | 5 | 1 | 0 | 0 |
| Cross-hatching 24h after KK test | 0 | 3 | 0 | 0 |
| Blisters m/g immediately after KK test | 5/3.5 | 2/2.5 | 2/1.5 | 2/1.5 |
| Blisters m/g 24h after KK test | 2/1.5 | 1/1.5 | 1/1.5 | 1/1.5 |

The results shown in Table 2 show that the base coat according to the invention exhibits better adhesion results in each case on the various plastic substrates and, more precisely, without additional loading and after various loading tests.
PP/EPDM - blend of polypropylene and ethylene propylene diene copolymer
ABS - acrylonitrile/butadiene/styrene

### Test methods:

### MB (Mercedes-Benz) depreservation test

The painted plastic components were slit slightly by means of cross-shaped incision and the slit point then irradiated at a spacing of 10 centimetres and at an angle of 90° with 40°C, 60°C and 80°C water at a pressure of 75 bar for 60 seconds. The creep corrosion at the cut was given in millimetres as a measure of the adhesion.

### Cross-hatching:

Refer to DIN EN ISO 2409, 2 mm cut spacing with Tesa tear, unloaded
0 = very good 5 = very poor; comparison table see standard

### Mandrel flex test:

Refer to DIN EN ISO 1519, cylinder with 60 mm diameter, ambient temperature

### Steam jet test:

Refer to DBL 5412, t = 30s, spacing = 10 cm
DBL = Daimler Benz Liefervorschrift (Daimler Benz delivery regulation)

### Condensed water constant climate test:

Refer to DIN 50017

### Assessment of the blistering:

Refer to DIN 53209
m = amount of blisters g = size of blisters; comparison images see standard

## Claims

1. Method for painting plastic substrates, comprising the steps:
1. applying a pigmented paint layer consisting of a colour- and/or effect-imparting coating composition directly to the plastic substrate and
2. curing the pigmented paint layer thus obtained,
wherein the applied colour- and/or effect-imparting coating composition comprises
A) 30 to 90% by weight of a conventional colour- and/or effect-imparting coating composition, comprising
Aa) at least one binder,
Ab) at least one colour and/or effect pigment,
Ac) at least one organic solvent and/or water and
Ad) optionally conventional paint additives and
B) 10 to 70% by weight of an adhesion-promoting composition, comprising
Ba) at least one ethylene vinyl acetate copolymer,
Bb) at least one chlorinated rubber,
Bc) at least one chlorinated polyolefin and
Bd) optionally organic solvents and/or water and conventional paint additives,
wherein the sum of the portions of components A) and B) makes up 100% by weight.

2. Method according to claim 1, comprising the steps:
1. applying a base coat layer consisting of a colour-and/or effect-imparting base coat directly to the plastic substrate,
2. evaporating and/or curing the base coat layer thus obtained,
3. applying a clear coat layer consisting of a transparent clear coat to the base coat layer obtained,
4. curing the clear coat layer obtained, optionally together with the base coat,
wherein the applied colour- and/or effect-imparting base coat comprises
A) 30 to 90% by weight of a conventional base coat composition, comprising
Aa) at least one binder,
Ab) at least one colour and/or effect pigment,
Ac) at least one organic solvent and/or water and
Ad) optionally conventional paint additives and
B) 10 to 70% by weight of the adhesion-promoting composition B),
wherein the sum of the portions of components A) and B) makes up 100% by weight.

3. Method according to claim 1, comprising the steps:
1. applying a pigmented monocoat finish layer consisting of a colour- and/or effect-imparting coating composition directly to the plastic substrate and
2. curing the top coat layer thus obtained,
wherein the applied colour- and/or effect-imparting monocoat finish comprises
A) 30 to 90% of a conventional monocoat finish composition, comprising
Aa) at least one binder,
Ab) at least one colour and/or effect pigment,
Ac) at least one organic solvent and/or water and
Ad) optionally conventional paint additives and
B) 10 to 70% by weight of the adhesion-promoting composition B),
wherein the sum of the portions of components A) and B) makes up 100% by weight.

4. Method according to claim 1, wherein the colour- and/or effect-imparting coating composition comprises 35 to 80% by weight of the conventional colour- and/or effect-imparting coating composition A) and 20 to 65% by weight of the adhesion-promoting composition B), wherein the sum of portions of components A) and B) makes up 100% by weight.

5. Method according to claim 1, wherein the colour- and/or effect-imparting coating composition comprises 40 to 70% by weight of the conventional colour- and/or effect-imparting coating composition constitution A) and 30 to 60% by weight of the adhesion-promoting composition B), wherein the sum of portions of components A) and B) makes up 100% by weight.

6. Method according to claim 1, wherein the adhesion-promoting composition B) comprises
Ba) 1.0 to 10.0% by weight of at least one ethylene vinyl acetate copolymer,
Bb) 0.5 to 10.0% by weight of at least one chlorinated rubber,
Bc) 1.0 to 10.0% by weight of at least one chlorinated polyolefin and
Bd) 70.0 to 97.5% by weight of organic solvent and
optionally, conventional paint additives, wherein the sum of the portions of components Ba) to Bd) makes up 100% by weight.

7. Method according to claim 1, wherein the step of applying the pigmented paint layer consisting of a colour- and/or effect-imparting coating composition is carried out in that a colour- and/or effect-imparting coating composition containing the adhesion-promoting composition B) is applied directly to the plastic substrate and a colour- and/or effect-imparting coating composition which does not contain the adhesion-promoting composition B) is then applied thereon.

8. Method according to claim 1, wherein the colour- and/or effect-imparting coating composition is a solvent-based coating composition.

9. Method according to claim 1, wherein the colour- and/or effect-imparting coating composition is a water-based coating composition.

10. Method according to claim 1 for painting plastics in vehicle painting.

11. A plastic substrate coated according to the process of claim 1.

## Patentansprüche

1. Verfahren zum Lackieren von Kunststoffsubstraten, umfassend die Schritte:
1. Auftragen einer Pigment enthaltenden Lackschicht, bestehend aus farb- und/oder effektvermittelnden Beschichtungszusammensetzung, direkt auf das Kunststoffsubstrat und
2. Härten der auf diese Weise erhaltenen Pigment enthaltenden Lackschicht,
wobei die aufgetragene farb- und/oder effektvermittelnde Beschichtungszusammensetzung aufweist:
A) 30% bis 90 Gew.% einer konventionellen farb- und/oder effektvermittelnden Beschichtungszusammensetzung, aufweisend:
Aa) mindestens ein Bindemittel
Ab) mindestens ein Farb- und/oder Effektpigment
Ac) mindestens ein organisches Lösemittel und/oder Wasser und
Ad) wahlweise konventionelle Lackadditive sowie
B) 10% bis 70 Gew.% einer die Haftung fördernden Zusammensetzung, aufweisend:
Ba) mindestens ein Ethyl/Vinylacetat-Copolymer
Bb) mindestens einen chlorierten Kautschuk
Bc) mindestens ein chloriertes Polyolefin und
Bd) wahlweise organische Lösemittel und/oder Wasser sowie Lackadditive,
wobei die Summe der Anteile der Komponenten A) und B) 100 Gew.% ausmacht.

2. Verfahren nach Anspruch 1, umfassend die Schritte:
1. Auftragen einer Grundlackschicht, bestehend aus einem farb- und/oder effektvermittelnden Grundlack, direkt auf das Kunststoffsubstrat,
2. Abdampfen und/oder Härten der auf diese Weise erhaltenen Grundlackschicht,
3. Auftragen einer Klarlackschicht, bestehend aus einem transparenten Klarlack, auf die erhaltene Grundlackschicht,
4. Härten der erhaltenen Klarlackschicht wahlweise gemeinsam mit dem Grundlack,
wobei der aufgetragene farb- und/oder effektvermittelnde Grundlack aufweist:
A) 30% bis 90 Gew.% einer konventionellen Grundlackzusammensetzung, aufweisend:
Aa) mindestens ein Bindemittel
Ab) mindestens ein Farb- und/oder Effektpigment
Ac) mindestens ein organisches Lösemittel und/oder Wasser und
Ad) wahlweise konventionelle Lackadditive sowie
B) 10% bis 70 Gew.% der die Haftung fördernden Zusammensetzung B)
wobei die Summe der Anteile der Komponenten A) und B) 100 Gew.% ausmacht.

3. Verfahren nach Anspruch 1, umfassend die Schritte:
1. Auftragen einer Pigment enthaltenden einschichtigen Decklackschicht, bestehend aus einer farb- und/oder effektvermittelnden Beschichtungszusammensetzung, direkt auf das Kunststoffsubstrat, und
2. Härten der Decklackschicht, die auf diese Weise erhalten wurde,
wobei die aufgetragene farb- und/oder effektvermittelnde Schicht eines Einschichtdecklackes aufweist:
A) 30% bis 90% einer konventionellen Zusammensetzung eines Einschichtdecklackes, aufweisend:
Aa) mindestens ein Bindemittel
Ab) mindestens ein Farb- und/oder Effektpigment
Ac) mindestens ein organisches Lösemittel und/oder Wasser und
Ad) wahlweise konventionelle Lackadditive und
B) 10% bis 70 Gew.% der die Haftung fördernden Zusammensetzung B)
wobei die Summe der Anteile der Komponenten A) und B) 100 Gew.% ausmacht.

4. Verfahren nach Anspruch 1; wobei die farb- und effektvermittelnde Beschichtungszusammensetzung 35% bis 80 Gew.% der konventionellen farb- und/oder effektvermittelnden Beschichtungszusammensetzung A) aufweist und 20% bis 65 Gew.% der Haftung fördernden Zusammensetzung **B)**, wobei die Summe der Anteile der Komponenten A) und B) 100 Gew.% ausmacht.

5. Verfahren nach Anspruch 1, wobei die farb- und effektvermittelnde Beschichtungszusammensetzung 40% bis 70 Gew.% der konventionellen farb- und/oder effektvermittelnden Beschichtungszusammensetzung in der Konstitution von A) aufweist und 30% bis 60 Gew.% der Haftung fördernden Zusammensetzung **B)**, wobei die Summe der Anteile der Komponenten A) und B) 100 Gew.% ausmacht.

6. Verfahren nach Anspruch 1, wobei die Haftung fördernde Zusammensetzung **B)** aufweist:
Ba) 1,0% bis 10,0 Gew.% mindestens eines Ethylen/Vinylacetat-Copolymers
Bb) 0,5% bis 10,0 Gew.% mindestens eines chlorierten Kautschükes
Bc) 1,0% bis 10,0 Gew.% mindestens eines chlorierten Polyolefins und
Bd) 70,0% bis 97,5 Gew.% eines organischen Lösemittels und wahlweise konventionelle Lackadditive, wobei die Summe der Anteile der Komponenten Ba) bis Bd) 100 Gew.% ausmacht.

7. Verfahren nach Anspruch 1, wobei der Schritt des Auftragens der Pigment enthaltenden Lackschicht, die aus einer farb- und/oder effektvermittelnden Beschichtungszusammensetzung besteht, derart ausgeführt wird, dass eine farb- und/oder effektvermitteInde Beschichtungszusammensetzung, die die Haftung fördernde Zusammensetzung B) enthält, direkt auf das Kunststoffsubstrat aufgetragen wird, und darauf eine farb- und/oder effektvermittelnde Beschichtungszusammensetzung, die nicht die Haftung fördernde Zusammensetzung B) enthält, aufgetragen wird.

8. Verfahren nach Anspruch 1, wobei die farb- und/oder effektvermittelnde Beschichtungszusammensetzung eine Beschichtungszusammensetzung auf Lösemittelbasis ist.

9. Verfahren nach Anspruch 1, wobei die farb- und/oder effektvermittelnde Beschichtungszusammensetzung eine Beschichtungszusammensetzung auf wässriger Basis ist.

10. Verfahren nach Anspruch 1 zum Lackieren von Kunststoffen in der Fahrzeuglackierung.

11. Kunststoffsubstrat, beschichtet mit dem Verfahren nach Anspruch 1.

## Revendications

1. Procédé pour peindre des substrats en plastique, comprenant les étapes consistant à:
1. appliquer une couche de peinture pigmentée consistant en une composition de revêtement conférant une couleur et/ou un effet directement sur le substrat en plastique et
2. faire durcir la couche de peinture pigmentée ainsi obtenue,
dans lequel la composition de revêtement appliquée conférant une couleur et/ou un effet comprend
A) 30 à 90% en poids d'une composition de revêtement conventionnelle conférant une couleur et/ou un effet, comprenant
Aa) au moins un liant,
Ab) au moins une couleur et/ou un pigment d'effet,
Ac) au moins un solvant organique et/ou de l'eau et
Ad) optionnellement des additifs de peinture conventionnels et
B) 10 à 70% en poids d'une composition promouvant l'adhésion, comprenant
Ba) au moins un copolymère d'éthylène et d'acétate de vinyle,
Bb) au moins un caoutchouc chloré,
Bc) au moins une polyoléfine chlorée et
Bd) optionnellement des solvants organiques et/ou de l'eau et des additifs de peinture conventionnels,
dans lequel la somme des parties des composants A) et B) constitue 100% en poids.

2. Procédé selon la revendication 1, comprenant les étapes consistant à:
1. appliquer une couche de revêtement de base consistant en un revêtement de base conférant une couleur et/ou un effet directement sur le substrat en plastique,
2. faire évaporer et/ou faire durcir la couche de revêtement de base ainsi obtenue,
3. appliquer une couche de revêtement incolore consistant en un revêtement incolore transparent sur la couche de revêtement de base obtenue,
4. faire durcir la couche de revêtement incolore obtenue, optionnellement conjointement avec le revêtement de base,
dans lequel le revêtement de base appliqué conférant une couleur et/ou un effet comprend
A) 30 à 90% en poids d'une composition de revêtement de base conventionnelle, comprenant
Aa) au moins un liant,
Ab) au moins une couleur et/ou un pigment d'effet,
Ac) au moins un solvant organique et/ou de l'eau et
Ad) optionnellement des additifs de peinture conventionnels et
B) 10 à 70% en poids d'une composition promouvant l'adhésion B),
dans lequel la somme des parties des composants A) et B) constitue 100% en poids.

3. Procédé selon la revendication 1, comprenant les étapes consistant à:
1. appliquer une couche de finition à revêtement unique pigmentée consistant en une composition de revêtement conférant une couleur et/ou un effet directement sur le substrat en plastique et
2. faire durcir la couche de revêtement de sommet ainsi obtenue,
dans lequel la finition à revêtement unique appliquée conférant une couleur et/ou un effet comprend
A) 30 à 90% en poids d'une composition de finition à revêtement unique conventionnelle, comprenant
Aa) au moins un liant,
Ab) au moins une couleur et/ou un pigment d'effet,
Ac) au moins un solvant organique et/ou de l'eau et
Ad) optionnellement des additifs de peinture conventionnels et
B) 10 à 70% en poids de la composition promouvant l'adhésion B),
dans lequel la somme des parties des composants A) et B) constitue 100% en poids.

4. Procédé selon la revendication 1, dans lequel la composition de revêtement conférant une couleur et/ou un effet comprend 35 à 80% en poids de la composition de revêtement conventionnelle conférant une couleur et/ou un effet A) et 20 à 65% en poids de la composition promouvant l'adhésion B), dans lequel la somme des parties des composants A) et B) constitue 100% en poids.

5. Procédé selon la revendication 1, dans lequel la composition de revêtement conférant une couleur et/ou un effet comprend 40 à 70% en poids du constituant de la composition de revêtement conventionnelle conférant une couleur et/ou un effet A) et 30 à 60% en poids de la composition promouvant l'adhésion B), dans lequel la somme des parties des composants A) et B) constitue 100% en poids.

6. Procédé selon la revendication 1, dans lequel la composition promouvant l'adhésion B) comprend
Ba) 1,0 à 10,0% en poids d'au moins un copolymère d'éthylène et d'acétate de vinyle,
Bb) 0,5 à 10,0% en poids d'au moins un caoutchouc chloré,
Bc) 1,0 à 10,0% en poids d'au moins une polyoléfine chlorée et
Bd) 70,0 à 97,5% en poids de solvant organique et optionnellement, des additifs de peinture conventionnels, dans lequel la somme des parties des composants Ba) à Bd) constitue 100% en poids.

7. Procédé selon la revendication 1, dans lequel l'étape d'application de la couche de peinture pigmentée consistant en une composition de revêtement conférant une couleur et/ou un effet est effectuée de manière telle qu'une composition de revêtement conférant une couleur et/ou un effet contenant la composition promouvant l'adhésion B) est appliquée directement sur le substrat en plastique et une composition de revêtement conférant une couleur et/ou un effet qui ne contient pas la composition promouvant l'adhésion B) est ensuite appliquée par dessus.

8. Procédé selon la revendication 1, dans lequel la composition de revêtement conférant une couleur et/ou un effet est une composition de revêtement à base de solvant.

9. Procédé selon la revendication 1, dans lequel la composition de revêtement conférant une couleur et/ou un effet est une composition de revêtement à base d'eau.

10. Procédé selon la revendication 1 pour peindre de la matière plastique lors de la peinture d'un véhicule.

11. Substrat en plastique revêtu selon le procédé de la revendication 1.
